# EUROPEAN PATENT SPECIFICATION

(11) **EP 4 462 882 B1**
(45) Date of publication and mention of the grant of the patent: **14.01.2026**
(21) Application number: 23172395.8
(22) Date of filing: 09.05.2023
(51) Int. Cl.: H04W 48/16, H04W 12/069, H04W 12/60, H04W 48/18

(54) **TECHNIQUES TO ENSURE A TRUSTED COMMUNICATION FOR A USER EQUIPMENT**
VERFAHREN ZUR SICHERSTELLUNG EINER VERTRAUENSWÜRDIGEN KOMMUNIKATION FÜR EIN BENUTZERGERÄT
TECHNIQUES POUR ASSURER UNE COMMUNICATION DE CONFIANCE POUR UN ÉQUIPEMENT UTILISATEUR

(43) Date of publication of application: 13.11.2024
(73) Proprietor: Deutsche Telekom AG, 53113 Bonn (DE)
(72) Inventor: SCHNEIDER, Daniela, Wien (AT)
(74) Representative: Braun-Dullaeus Pannen Emmerling Patent- & Rechtsanwaltspartnerschaft mbB

(56) References cited:
- US-A1- 2006 230 278
- US-A1- 2016 044 113
- US-A1- 2016 073 271
- US-A1- 2017 126 705

## Description

The invention relates to a method, a UE and a network operator to ensure a trusted communication for a user equipment in a communication system.

Today's mobile network registration processes are based on the concept that the network operator authenticates a user equipment (UE) of the user if he wants to access the network environment of the network operator. Typically, this is done by using the appropriate information stored on the SIM and/or eSIM card. A similar concept also applies when the user tries to access xDSL networks, wherein the credential information is typically stored within the router device.

The case can be different if the UE tries to access a public network, for example a WLAN network. Typically, the appropriate network registration is done without authentication. The user or the UE is not authenticated, but it is only evaluated if the necessary credentials SSID and keys are valid in a sense that the user is being allowed to use the network with his UE. However, the user is not being authenticated, which means that the network operator has no information about the trustworthiness of the user and/or the UE. In case of the public network, sometimes authentication of the customer is done after granting access to the network, wherein the authentication is done in an OTT approach (for example the user is being requested to enter his credentials when he tries to access to an Internet service like video streaming). However, this method leaves an initial security risk because it allows the initial registration to the network without authentication.

In future network architectures, the variety of different network operators, service providers and/or UEs will still increase and become more diverse. Therefore, authentication and/or authorization aspects will become even more important.

What is missing in today's network architectures and will become even more important in future network architectures, is the possibility that the user and/or the UE is provided with means in order to judge if the network to which the UE tries to access is trustworthy, too.

Even in mobile networks, in which the customer is authenticated using the SIM credentials (as stated before) and the security is provided by the design of the network - by using the authentication functionality of the network - only the user is being authenticated. In those cases, the UE typically considers the network operator of the mobile network implicitly as being secure if it can provide the correct challenge and/or if respective response keys are being calculated with the correct algorithm and the appropriate credentials from the authentication function are being provided. However, this cannot be considered as being a measure that enables the user to judge if the network operator is being trustworthy as it is actually part of the authentication of the user.

Additionally, the interworking between networks with each other will increase even more, in particular to provide services as flexible and reliable as possible. To facilitate this interworking, networks need to trust each other.

The current situation is that the interaction between networks is done in a way that those networks form a kind of "closed group", in which they know and trust each other. For example, one member of the group knows that the other member of the group is under a certain national regulation. The interconnections are well defined and each operator has to maintain its own interconnect landscape and the respective configuration. However, this concept is not flexible regarding the interworking with "new" networks.

US 20060230278 A1: This document describes a method for establishing trusted communication between a client device and a network. The client device receives a trust indication from the network, provided by an access network, gateway, or trusted authority. The client uses this pre-determined trust indication to make access decisions.

US 20160044113 A1: This document outlines a system where a connection agent on the client device assesses the trustworthiness of a network using pre-configured provisioning information or cached data. The client device compares available network information, such as SSID, to this stored provisioning data to determine whether the network can be trusted.

US 20170126705 A1: In this document, a Secure WLAN Connection Agent (SWCA) collects network-related technical data, such as SSID, MAC address, and encryption protocols, from access points to calculate a trust score for the network. Based on this data, the client assesses network security and may display a trust rating for the user to decide on connecting.

US 20170126705 A1: This document discusses a system that monitors the security of access points by evaluating technical characteristics like encryption protocols, SSIDs, and MAC addresses. The system can update a network's trust level over time as more data is gathered.

In the view of above, it is an object of the present invention to provide techniques that enable a trusted communication for a user equipment or for a further network.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

The term network is to be understood as being a communication network.

According to a first aspect of the invention, a method is disclosed to ensure a trusted communication for a user equipment or for a further network in or to a communication system,
the communication system comprises a network operator that provides a communication network with at least one communication path. The communication path can be a cellular, a fixed line and/are Wi-Fi communication path. The communication path can be used by the **UE** or by the further network to communicate with the communication network,
the method comprises the following steps:
   - Obtaining authentication parameters of the network operator by the UE or by the further network via the communication path; the further network can be a yet unknown network,
   - Analyzing the authentication parameters with respect to a trustworthiness level of the network operator and determining the level of trustworthiness of the network operator;
      o the UE or the further network can analyze the authentication parameters by comparing them with corresponding authentication parameters that can be stored within the UE (or within the further network) and/or that can be obtained by a database request or a registry request as will be described in the following and/or that can be verified at a certain authority point;
      o for the purpose of analyzing and determining the level of trustworthiness, the UE or the further network can comprise an algorithm implemented on the process of the UE or the further network that is configured to perform the analysis and determination;
   - Accessing the network of the network operator based on the determined level of trustworthiness.

This provides the advantage that it is possible for the first time that the UE or a further network operator receives authentication information from the network operator so that the UE or the further network can differentiate between trustworthy and non-trustworthy network operators. A trustworthy network operator provides means for secure communication that provides measures against attempted fraud and data falsification. Hence, the user or the further network operator can communicate in a trusted way with the network. As explained before, due to the expected increase of digital communication with more network operators to become an important issue that the user is provided with means to assess the level of trustiness of the network operator so he, the UE or the further network can take appropriate measures.

In an embodiment, the UE or the further network rejects access to the network if the level of trustworthiness is too low or connects to the network if the level of trustworthiness is sufficiently high. Regarding the level of trustiness, it is possible to simply differentiate between non-trustworthy and trustworthy. In that case a non-trustworthy network operator has a too low level of trustworthiness and a trustworthy network operator has a sufficiently high level of trustworthiness. However, it is even possible to divide the levels of trustworthiness to a finer granularity. For example, a high level of trustworthiness, medium level of trustworthiness, low level of trustworthiness and no trustworthiness. It can be specified within the UE or within the further network which of those levels is being regarded as a sufficiently high level of trustworthiness. This can be implemented in order that the UE or the further network automatically connects or rejects the network without the need of interaction of the user or the further network operator. Hence, it is being prevented that the user or the further network operator connects unintentionally to a non-trustworthy network.

This has the effect that the UE or the further network only communicates with the network if the network operator achieves a sufficiently high level of trustworthiness so that the communication of the UE or the further network can be regarded as being secure from fraud and/or data manipulation.

In an embodiment, an applications running on the UE or on the further network specifies its specific required level of trustworthiness and that the decision of the UE or the further network to reject or connect to the network is based on the specific level of trustworthiness.

For example, an application of the UE or an application of the further network that simply displays weather forecast data to the user typically requires a lower level of trustworthiness compared to an application concerning financial transactions of the user. Hence, specifying specific level of trustworthiness for each app or service enables the user to access a network of a network operator with such a weather forecast App even if the level of trustworthiness would be too low for a banking app. This increases the opportunities for the user to connect to different networks.

In an embodiment, the UE or the further network obtains the authentication parameters when registering to the network from the network operator and/or from a database of a trusted authority.

This provides the effect that a secure communication is being ensured at a very early stage between the UE or the further network and the network before the UE or the further network exchanges sensitive data with a potentially unsecure network. The trusted authority can be run by a state (like Germany) or intergovernmental organization (like the EU) or trusted service provider. The trusted authority prevents manipulation of the data of its database and/or can charge if network operator is being allowed of being entered into the database. The trusted authority can communicate in an encrypted way with the UE or the further network and is being accessible by the UE or the further network. Receiving the authentication parameters from the database of the trusted authority has the effect that the UE or the further network can be sure that the information of the database of the trusted authority is being correct.

In an embodiment, the authentication parameters comprise an ID of the network operator, a public key of the network operator and/or a level of trustworthiness of the network operator and/or a signature of the issuing authority. The authentication parameters can be provided in the form of a table that lists each or a subset of those authentication parameters in an entry of the table, wherein the entry is been configured to relate the authentication parameters to each other, for example by writing them into one command line of the table. The ID serves the purpose to distinguish between different network operators. For example, the ID is a UUID. The public key is the public key of the network operator that can be used by the UE or by the further network to encrypt a message that it sends over the communication path to the network operator. Only the network operator processes the corresponding private key so that it can decrypt the message. The level of trustiness serves the purpose that the UE or the further network can determine the level of trustiness of the network operator as described above.

In an embodiment, the ID and/or the public key of the network operator is stored at the network operator. The network operator can send its ID to the user equipment or to the further network so that the UE or the further network is being aware with which network it tries to communicate. It is also possible that the network operator sends its public key to the UE or the further network so that encrypted communication can be established.

If the network operator would provide its level of trustiness, the UE or the further network cannot be sure if the network operator tells the truth in this respect. Therefore, the UE or the further network can retrieve the authentication parameters from the database of the trusted authority. After the UE or the further network knows the ID of the network operator it can request the corresponding authentication parameters from the database of the trusted authority. The trusted authority can send the information about the level of trustiness to the UE or the further network. However, the UE or the further network cannot be sure that the network operator really provided the UE with the correct ID. So it might happen, that the UE or the further network will trust the network and uses the ID of a trusted network. For that purpose, the UE or the further network can make use of the public key that is being stored within the trusted authority. It uses the public key from the entry of the database because it can be sure that this is really the public key that is associated to the ID of the network operator, wherein only the "real" network operator has the corresponding private key. The UE or the further network can then send a validation message encrypted with the public key to the network operator and determine the network operator level of trustworthiness of the network operator based on receiving the correctly decrypted validation message from the network operator. Because only the "real" network operator will be able to correctly decrypted the validation message and send it back to the UE or to the further network, the network operator can be determined as being trustworthy in that case and can be determined as being non-trustworthy if it cannot send back the original validation message to the UE or to the further network.

The steps described above can be performed in the following embodiments of the invention: The ID of the network operator, the public key of the network operator and/or the level of trustworthiness of the network operator can be stored and/or retrieved within the database of the trusted authority and/or the UE (or the further network) sends a validation message encrypted with the public key to the network operator and determines the network operator level of trustworthiness of the network operator based on receiving the correctly decrypted validation message from the network operator. The validation message can be a randomly generated message and/or can be verifiable credentials of the network operator. In an embodiment, the validation message is only known to the UE or to the further network before sending it to encrypted to the network operator.

It is also possible that the UE or the further network connects to the network is a known network operator to which the UE or the further network has connected before. This saves the computational overhead that is necessary for determining the level of trustiness.

In an embodiment, a network operator's request of entry into the database is permitted only after successful examination of the level of trustworthiness by the trusted authority. This ensures that the entries of the database of the trusted authority are being correct and that predefined standards regarding the level of trustiness can be applied.

In an embodiment, the entry of the network operator within the database is deleted or changed after examination by the trusted authority that yields that the level of trustworthiness has decreased. This provides the effect, that the entries of the database are still being correct even if the level of trustiness of the network operator changes. For example, the network operator can examine if the entry of the database is still correct if users indicate that a change regarding the level of trustiness might have occurred.

In an embodiment, the UE indicates the level of trustworthiness to the user of the UE and that the user decides to reject access to the network or to connect to the network if the level of trustworthiness. For example, the UE can display the level of trustworthiness to the user. To make it easier for the user to differentiate between trustworthy and non-trustworthy network operator, different color codes like green stands for trustworthy and red stands for non-trustworthy can be used.

This provides the effect that it is up to the user if he wants to connect to the network or not. It can happen that a network is being trustworthy but that this network is not being entered into the database of the trusted authority which would result in the determination of the low level of trustworthiness. In that case, this embodiment enables that the user can nevertheless access the network. It also enables the user to access network if he doesn't care about trustworthiness under special circumstances. For example, if he simply wants to check some information like public transport timetables on the Internet.

In an embodiment, the network and/or the further network is a cellular network, a Wi-Fi network and/or a fixed line network. In principle, the method can be applied to every kind of current and future network, in particular to all kind of mobile networks like 3G, 4G, 5G and/or 6G. However, in general mobile network operators are being more trustworthy than operators of public WLAN networks simply because it is more costly and more difficult to set up mobile networks. In many countries operating mobile networks and the goes along with strict regulations. Hence, because it is more risky to access to "unknown" public WLAN, the method can be restricted to public WLAN to save computational efforts. When the UE tries to access a public WLAN it can be a beneficial to perform the data exchange with the trusted authority via an "independent" cellular communication path if available.

In an embodiment, the UE provides the network operator with the authentication parameters of the UE.

This provides the effect that a 2-way authentication is being possible so that the UE can trust the network operator and the network operator can trust the UE, too.

According to a second aspect of the invention a UE is being provided to ensure a trusted communication for a user using the UE, wherein the UE is configured to execute the steps of the method described above. The UE can be a tablet, a smartphone, a computer that comprises the typical communication means for communicating with the communication network. The smart phone comprises a eSIM and/or SIM with credentials regarding its authentication with respect to the network operator. The UE also comprises processing units on which an algorithm can be implemented that is being configured to perform the calculating steps of the method, which are related to the UE, like the analyzing, determination and/or the decision steps regarding accessing or not accessing the network.

According to a third aspect of the invention, a network operator to ensure a trusted communication for a UE is being provided, wherein the network operator is being configured to provide its ID to the UE and/or to provide authentication parameters to a trusted authority.

According to a fourth aspect of the invention, a further network is being disclosed, wherein the further network is being configured to receive the ID of the network and to perform the steps according to the method above.

In an embodiment, the network operator is configured to decrypt the validation message sent by the UE with its private key and to return the decrypted validation message to the UE. In particular, the network controller is the entity of the network operator that communicates with the UE, provides the authentication parameters and/or decrypts and sends the validation message to the UE.

According to a fourth aspect of the invention a computer program is disclosed comprising instructions which, when the program is executed by a processing unit, in particular a processing unit of the UE, cause the processing unit to carry out the steps of the method of claim 1.

In the following, preferred implementation examples of the present invention are explained with reference to the accompanying figure:
- Fig. 1:: shows a communication system according to the invention along with the inventive method.
- Fig. 2:: shows a table comprising authentication parameters.
- Fig. 3:: shows the usage of regulation indication parameters in case of a service request;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

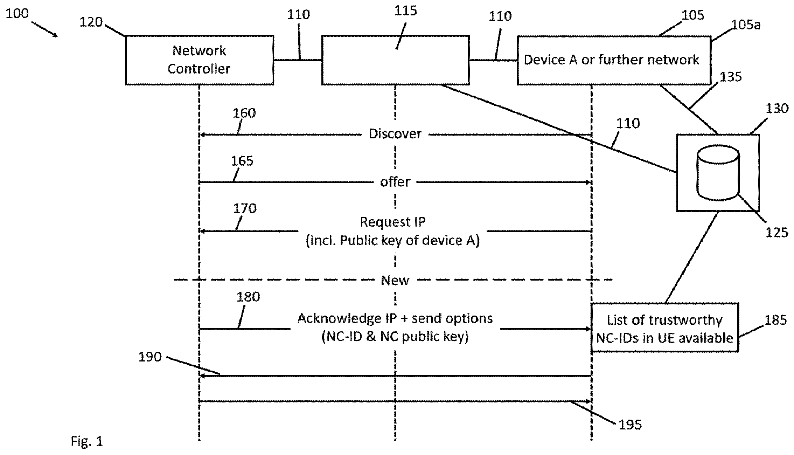

Fig. 1 shows a communication system 100 according to the invention along with the inventive method.

The communication system 100 comprises a user equipment (UE) 105 that can be a device that is hosting and/or requesting a service, wherein usage of the service includes data communication over a network. The UE 105 can be a mobile device like a smart phone or a device 105 attached to a fixed network.

In another embodiment, the communication system 100 comprises a further network 105a that can hoste and/or request a service, wherein usage of the service includes data communication over a network. It is expected that future network solutions have more dynamics and more interworking scenarios; there it will be important for services that they are only transported via highly trustworthy networks, in particular regulated networks.

By means of one of its communication interfaces, the UE 105 or the further network 105a can access a communication path 110 of a RAN and/or a WLAN a network operator 115. In particular, the communication path 110 can terminate at a network controller 120 of the network operator 115. The network controller 120 is a software process that maintains and controls, which entities are registered within the context of the network. The network operator 115 provides the network to which the UE 105 or the further network 105a wants to access regarding the usage of a service. The service can be a telecommunication service of various kind, like telephony or financial transactions. However, for some services it is important that the user can have trust in the network operator so that the data exchange with the service can be performed in a secure way. As the network operator 115 runs the network, the terms network operator and network basically have the same technical meaning. If a network is trustworthy, then the network operator is trustworthy to and vice versa.

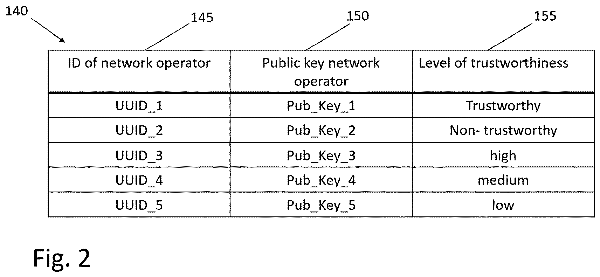

The communication system 100 also comprises and/or provides access to a database 125 of the trusted authority 130 that can store a table 140 according to Fig. 2 that shows authentication parameters of network operators. The user equipment 105 or the further network 105a exchanges encrypted data with the database 125 over the communication path 110 or over a further, logically separated, communication path 135. The further communication path 135 is in particular a cellular communication path 135.

The table 140 shows a first column 145 that comprises the ID of network operators in the UUID format, a second column 150 comprising the public keys of the respective network operator and/or a third column 155 that indicates the level of trustworthiness of the network operator 115. Possible entries for the level of trustworthiness are trustworthy, trustworthy, a high level of trustworthiness a medium level of trustworthiness a low level of trustworthiness and/or a zero level of trustworthiness. The table 140 can also comprise an indication that states if the network 115 is being regulated or not. This can imply that for example W-LAN networks of a private or a public hotspot can indicate, by sending the regulation indication along with their ID, that they are not regulated by national or continental regulation demands. The network can send this regulation indication to the UE 105 or to the further network 105a. For example, the parameter "network:0" indicates that the network 115 is not regulated, wherein "network:1" indicates that it is regulated according to a regulation law.

The UE 105 or the further network 105a wants to use a service that requires data exchange with a network. Hence, in step 160, the UE 105 or the further network 105a searches for available networks and discovers the network 115 of the network operator 115.

In step 165, the network operator 115 provides an offer regarding accessing the network to the UE 105 or to the further network 105a.

In step 170, the UE 105 or the further network 105a requests an IP of the service and provides the network controller 120 with its public key, which means the public key of the UE 105 or the further network 105a. It is also possible that the UE 105 provides the network controller 120 in step 170 with its credentials, which are being stored on the SIM or the eSIM in order to enable an authentication of the UE 105.

In step 180, the network controller 120 can send a message providing the IP address to the UE 105 or to the further network 105a, wherein the message can comprise the ID of the network operator, for exampleUUID_1 in the UUID format and/or indication of regulation. It is also possible that the network controller 120 provides the public key Pub_Key_1 to the UE 105 or to the further network 105a in this step to ensure secure communication.

In Step 185: the UE 105 or the further network 105a can comprise a list according to table 140 stored within a memory of the UE 105 (or within the further network 105a) and/or the UE can request the corresponding information from the database 125 at the trusted authority 130. As the UE 105 or the further network 105a knows the ID of the network operator UUID_1, table 140 provides in column 150 the respective public key of the network operator Pub_Key_1 and that the level of trustworthiness is trustworthy.

Hence, the analysis of the authentication parameters by the UE 105 or the further network 105a results in the determination that the network operator UUID_1 is being trustworthy so that the UE 105 access the network in order to run the service.

If the UE 105 or the further network 105a wants to perform a further validation step regarding the trustworthiness of the network operator 115, it can send in step 190 a validation message to the network operator 120, wherein the validation message is only known to the UE 105 or the further network 105a; and wherein the validation message is being encrypted with the public key Pub_key_1 retrieved from the database 140.

If the network operator is the "actual" network operator that is related to the Pub_key_1, then it also possesses the corresponding private key Priv_key_1. With the use of Priv_key_1, the network controller 120 can decrypt the validation message and send it back in step 195 to the UE 105. If the UE 105 receives the correctly encrypted validation message, it can conclude that the network operator 115 really corresponds to UUID_1 of table 140.

The UE 105 or the further network 105a will access the network to run the service safely with the trustworthy network operator UUID_1.

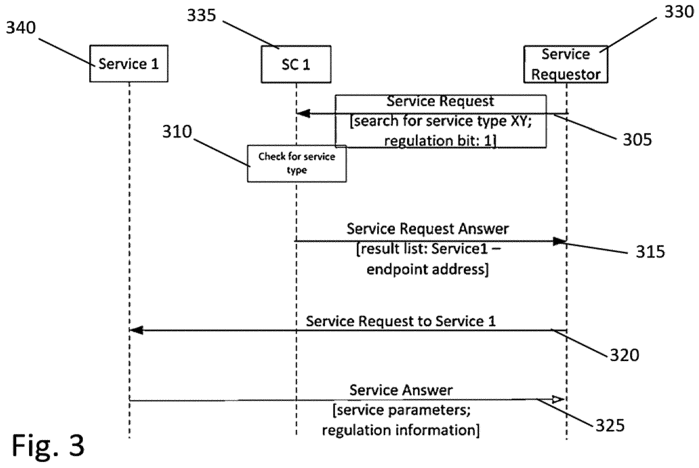

Fig. 3 shows the usage of regulation indication parameters in case of a service request.

Even services can use identification parameters, in particular the regulation indication parameters, in order to obtain information if those services are located in a regulated or a non-regulated network 115.

In step 305 a service requestor 330 can request a service of the service type "xy" and with the "indication regulation bit:1" from a service controller 335.

In step 310, the service controller 335 can check for this service type "xy".

In step 315, the service controller 335 sends a service request answer that lists that the service "1" with the endpoint address "1z" corresponds to the service request by being a service of the service type "xy" with the"indication regulation bit:1".

In step 320, the service requestor 330 can request the service "1" 340 by using the provided endpoint address.

In step 325, the service "1" 340 can send a service answer comprising service paramters and the regulation indication.

## Claims

1. Method to ensure a trusted communication performed by a user equipment, UE, or by a further network in a communication system,
the communication system comprises a network of a network operator with at least one communication path, wherein the communication path can be used by the UE to communicate with the network,
the method comprises the following steps:
• Obtaining from a database of a trusted authority authentication parameters of the network operator by the UE or by the further network via the communication path, wherein the authentication parameters comprise an ID of the network operator, a public key of the network operator and a level of trustworthiness of the network operator;
• Analyzing by the UE or the further network the authentication parameters with respect to a trustworthiness level of the network operator by comparing them with corresponding authentication parameters that are stored within the UE or within the further network and/or that are obtained by a database request or a registry request, whereby the analysis results in the determination of the level of trustworthiness of the network operator;
• Accessing by the UE or the further network the network of the network operator if the level of trustworthiness is sufficiently high or rejecting access to the network by the UE or the further network if the level of trustworthiness is too low.

2. The method of claim 1, further comprisig specifing by an application running on the UE (105) its specific required level of trustworthiness of the network operator and deciding by the UE (105) rejecting or connecting to the network based on the specific level of trustworthiness of the network operator.

3. The method of claim 1, further comprising storing an ID of the network operator, a public key of the network operator and/or the level of trustworthiness of the network operator within the database of the trusted authority.

4. The method of claim 3, further comprising permitting a network operator's request of entry into the database after successful examination of the level of trustworthiness by the trusted authority.

5. The method of any of the claims 3 to 4, further comprising deleting or changing the entry of the network operator within the database after examination by the trusted authority that yields that the level of trustworthiness has decreased.

6. The method of claim 1, further comprising the UE sending a validation message encrypted with the public key of the network operator to the network operator and determining trustworthiness of the network operator based on receiving a correctly decrypted validation message from the network operator.

7. The method of any of the claims 1 to 6, further comprising the UE providing the network operator with the authentication parameters of the UE.

8. A user equipment, UE, to ensure a trusted communication for a user using the UE, wherein the UE is configured to execute the steps performed by the UE in the method according to claim 1.

9. A further network to ensure a trusted communication with a network, wherein the the further network is configured to execute the steps performed by the further network in the method according to claim 1.

## Patentansprüche

1. Verfahren, um eine vertrauenswürdige Kommunikation zu gewährleisten, die von einem Benutzergerät, UE, oder von einem weiteren Netzwerk in einem Kommunikationssystem durchgeführt wird, wobei das Kommunikationssystem ein Netzwerk eines Netzwerkbetreibers mit mindestens einem Kommunikationspfad umfasst, wobei der Kommunikationspfad von dem UE verwendbar ist, um mit dem Netzwerk zu kommunizieren, wobei das Verfahren die folgenden Schritte umfasst:
• Beziehen von Authentifizierungsparametern des Netzwerkbetreibers von einer Datenbank einer vertrauenswürdigen Autorität durch das UE oder durch das weitere Netzwerk über den Kommunikationspfad, wobei die Authentifizierungsparameter eine ID des Netzwerkbetreibers, einen öffentlichen Schlüssel des Netzwerkbetreibers und einen Vertrauenswürdigkeitsgrad des Netzwerkbetreibers umfassen;
• Analysieren der Authentifizierungsparameter in Bezug auf einen Vertrauenswürdigkeitsgrad des Netzwerkbetreibers durch das UE oder das weitere Netzwerk mittels Vergleichens derselben mit entsprechenden Authentifizierungsparametern, die innerhalb des UE oder innerhalb des weiteren Netzwerks gespeichert sind und/oder die durch eine Datenbankanforderung oder eine Registrierungsanforderung bezogen werden, wobei die Analyse zu der Bestimmung des Vertrauenswürdigkeitsgrads des Netzwerkbetreibers führt;
• Zugreifen auf das Netzwerk des Netzwerkbetreibers durch das UE oder durch das weitere Netzwerk, wenn der Vertrauenswürdigkeitsgrad ausreichend hoch ist, oder Ablehnen des Zugriffs auf das Netzwerk durch das UE oder durch das weitere Netzwerk, wenn der Vertrauenswürdigkeitsgrad zu niedrig ist.

2. Verfahren nach Anspruch 1, ferner umfassend Spezifizieren, durch eine Anwendung, die auf dem UE (105) ausgeführt wird, ihres spezifischen erforderlichen Vertrauenswürdigkeitsgrads des Netzwerkbetreibers, und Entscheiden durch das UE (105) über Ablehnen oder Verbinden mit dem Netzwerk basierend auf dem spezifischen Vertrauenswürdigkeitsgrad des Netzwerkbetreibers.

3. Verfahren nach Anspruch 1, ferner umfassend Speichern einer ID des Netzwerkbetreibers, eines öffentlichen Schlüssels des Netzwerkbetreibers und/oder des Vertrauenswürdigkeitsgrads des Netzwerkbetreibers innerhalb der Datenbank der vertrauenswürdigen Autorität.

4. Verfahren nach Anspruch 3, ferner umfassend Zulassen einer Anforderung eines Netzwerkbetreibers, in die Datenbank eingetragen zu werden, nach erfolgreicher Prüfung des Vertrauenswürdigkeitsgrads durch die vertrauenswürdige Autorität.

5. Verfahren nach einem der Ansprüche 3 bis 4, ferner umfassend Löschen oder Ändern des Eintrags des Netzwerkbetreibers innerhalb der Datenbank, nachdem eine Prüfung durch die vertrauenswürdige Autorität ergibt, dass der Vertrauenswürdigkeitsgrad abgenommen hat.

6. Verfahren nach Anspruch 1, ferner umfassend Senden, durch das UE, einer Validierungsnachricht, die mit dem öffentlichen Schlüssel des Netzwerkbetreibers verschlüsselt ist, an den Netzwerkbetreiber und Bestimmen der Vertrauenswürdigkeit des Netzwerkbetreibers basierend auf Empfangen einer korrekt entschlüsselten Validierungsnachricht von dem Netzwerkbetreiber.

7. Verfahren nach einem der Ansprüche 1 bis 6, ferner umfassend Bereitstellen, durch das UE, der Authentifizierungsparameter des UE an den Netzwerkbetreiber.

8. Benutzergerät, UE, dazu vorgesehen, eine vertrauenswürdige Kommunikation für einen Benutzer, der das UE verwendet, zu gewährleisten, wobei das UE dazu eingerichtet ist, die Schritte auszuführen, die von dem UE in dem Verfahren nach Anspruch 1 durchgeführt werden.

9. Weiteres Netzwerk, dazu vorgesehen, eine vertrauenswürdige Kommunikation mit einem Netzwerk zu gewährleisten, wobei das weitere Netzwerk dazu eingerichtet ist, die Schritte auszuführen, die von dem weiteren Netzwerk in dem Verfahren nach Anspruch 1 durchgeführt werden.

## Revendications

1. Procédé pour garantir une communication sécurisée effectuée par un équipement d'utilisateur, UE, ou par un autre réseau au sein d'un système de communication, le système de communication comprend un réseau d'un opérateur de réseau doté d'au moins un trajet de communication, dans lequel le trajet de communication peut être utilisé par l'UE pour communiqueR avec le réseau, le procédé comprend les étapes suivantes :
• l'obtention, à partir d'une base de données d'une autorité de confiance, des paramètres d'authentification de l'opérateur de réseau par l'UE ou par l'autre réseau via le trajet de communication, dans lequel les paramètres d'authentification comprennent un ID de l'opérateur de réseau, une clé publique de l'opérateur de réseau et un niveau de fiabilité de l'opérateur de réseau ;
• l'analyse, par l'UE ou l'autre réseau, des paramètres d'authentification au regard d'un niveau de fiabilité de l'opérateur de réseau, en les comparant aux paramètres d'authentification correspondants qui sont mémorisés dans l'UE ou dans l'autre réseau et/ou obtenus par une requête de base de données ou une requête d'enregistrement, moyennant quoi l'analyse permet de déterminer le niveau de fiabilité de l'opérateur de réseau ;
• l'accès au réseau de l'opérateur de réseau par l'UE ou l'autre réseau est autorisé si le niveau de fiabilité est suffisamment élevé ou l'accès au réseau par l'UE ou l'autre réseau est refusé si le niveau de fiabilité est insuffisant.

2. Procédé selon la revendication 1, comprenant en outre la spécification, par une application exécutée sur l'UE (105), du niveau de fiabilité spécifique requis de l'opérateur de réseau et la décision, par l'UE (105), de refuser ou de se connecter au réseau sur la base du niveau de fiabilité spécifique de l'opérateur de réseau.

3. Procédé selon la revendication 1, comprenant en outre la mémorisation, dans la base de données de l'autorité de confiance, d'un ID de l'opérateur de réseau, d'une clé publique de l'opérateur de réseau et/ou du niveau de fiabilité de l'opérateur de réseau.

4. Procédé selon la revendication 3, comprenant en outre l'autorisation, pour un opérateur de réseau, de sa demande d'entrée dans la base de données après validation de son niveau de fiabilité par l'autorité de confiance.

5. Procédé selon une quelconque des revendications 3 à 4, comprenant en outre la suppression ou la modification de l'entrée de l'opérateur de réseau dans la base de données après examen par l'autorité de confiance, qui constate une baisse du niveau de fiabilité.

6. Procédé selon la revendication 1, comprenant en outre l'envoi par l'UE d'un message de validation chiffré avec la clé publique de l'opérateur de réseau à l'opérateur de réseau et la détermination de la fiabilité de l'opérateur de réseau sur la base de la réception d'un message de validation correctement déchiffré provenant de l'opérateur de réseau.

7. Procédé selon une quelconque des revendications 1 à 6, comprenant en outre la communication par l'UE à l'opérateur de réseau des paramètres d'authentification de l'UE.

8. Equipement d'utilisateur, UE, pour garantir une communication sécurisée pour un utilisateur utilisant l'UE, dans lequel l'UE est configuré pour exécuter les étapes effectuées par l'UE dans le procédé selon la revendication 1.

9. Réseau supplémentaire pour garantir une communication sécurisée avec un réseau, dans lequel le réseau supplémentaire est configuré pour exécuter les étapes effectuées par le réseau supplémentaire dans le procédé selon la revendication 1.
